# EUROPÄISCHE PATENTSCHRIFT

(11) **EP 1 764 952 B1**
(45) Veröffentlichungstag und Bekanntmachung des Hinweises auf die Patenterteilung: **09.04.2008**
(21) Anmeldenummer: 05108654.4
(22) Anmeldetag: 20.09.2005
(51) Int. Cl.: H04L 12/28, H04L 12/56, H04Q 7/28, H04Q 7/38

(54) **Verfahren und System zur dynamischen Konfiguration einer Sende-/Empfangsvorrichtung eines Endgeräts**
Method and system for dynamic configuration of a transceiver
Méthode et système pour configuration dynamique d'un émmetur-récepteur

(43) Veröffentlichungstag der Anmeldung: 21.03.2007
(73) Patentinhaber: Swisscom AG, 3050 Bern (CH)
(72) Erfinder: Mangold, Stefan, 3053 Münchenbuchsee (CH); Jarosch, Andreas, 6319 Allenwinden (CH)
(74) Vertreter: BOVARD AG

(56) Entgegenhaltungen:
- US-A1- 2005 058 151
- US-A1- 2005 147 112
- HONGQIANG ZHAI ET AL: "A dual-channel MAC protocol for mobile ad hoc networks" 29. November 2004 (2004-11-29), GLOBAL TELECOMMUNICATIONS CONFERENCE WORKSHOPS, 2004. GLOBECOM WORKSHOPS 2004. IEEE DALLAS, TX, USA 29 NOV. - 3 DEC., 2004, PISCATAWAY, NJ, USA,IEEE, PAGE(S) 27-32 , XP010783847 ISBN: 0-7803-8798-8 * Abbildung 2 *
- TIANTONG YOU ET AL: "BROADEN: An efficient collision-free mac protocol for ad hoc wireless networks" 20. Oktober 2003 (2003-10-20), LOCAL COMPUTER NETWORKS, 2003. LCN '03. PROCEEDINGS. 28TH ANNUAL IEEE INTERNATIONAL CONFERENCE ON 20-24 OCT. 2003, PISCATAWAY, NJ, USA,IEEE, PAGE(S) 698-707 , XP010665663 ISBN: 0-7695-2037-5 * das ganze Dokument *
- HAAS Z J ET AL: "DUAL BUSY TONE MULTIPLE ACCESS (DBTMA)- A MULTIPLE ACCESS CONTROL SCHEME FOR AD HOC NETWORKS" IEEE TRANSACTIONS ON COMMUNICATIONS, IEEE SERVICE CENTER, PISCATAWAY, NJ, US, Bd. 50, Nr. 6, Juni 2002 (2002-06), Seiten 975-985, XP001125107 ISSN: 0090-6778

## Beschreibung

### Technisches Gebiet

Die vorliegende Erfindung betrifft ein Verfahren und ein System zur dynamischen Konfiguration einer Sende-/Empfangsvorrichtung eines Endgeräts für den Zugriff auf einen drahtlosen Kommunikationskanal.

### Stand der Technik

Die drahtlose Übermittlung von Informationen erfolgt über Kommunikationskanäle des Frequenzspektrums. Das Frequenzspektrum kann sich dabei über Frequenzen von einigen 100 kHz (Radio-Langwelle) bis zu Frequenzen von einigen PHz (Ultraviolettes Licht) erstrecken. Durch einen Kommunikationskanal wird dabei ein bestimmbarer Teil des Frequenzspektrums für die Übertragung von Informationen genutzt. So stehen beispielsweise bestimmte Kanäle innerhalb eines Frequenzbereichs von 96 MHz bis 108 MHz den Betreibern von Radiostationen zur Übermittlung von Radioprogrammen zur Verfügung oder es stehen bestimmte Kanäle innerhalb eines Frequenzspektrums von 2.4 GHz bis 2.5 GHz für den Betrieb von so genannten WLAN Hotspots (WLAN: Wireless Local Area Network) zur Verfügung. Das Frequenzspektrum wird von Behörden in Frequenzbereiche unterteilt und die Behörden legen fest, wie solche Frequenzbereiche genutzt werden dürfen. Für gewisse Frequenzbereiche wird vom Betreiber einer Sendestation eine behördliche Lizenz für die Benutzung eines bestimmten Kommunikationskanals, also z.B. eine Lizenz für die Benutzung des FM Kommunikationskanals (FM: Frequency Modulation) auf der Frequenz 104.8 MHz, benötigt. Die Behörden stellen dabei sicher, dass nur derjenige welcher die Lizenz für die Benutzung dieses FM Kommunikationskanals hat, auf diesem Kommunikationskanal sendet. Der Standort von unberechtigten Sendern kann beispielsweise durch eine Peilmessung ermittelt werden und ein solcher Sender kann anschliessend von den Behörden abgeschaltet werden. Für gewisse andere Frequenzbereiche wird für den Betrieb eines Senders keine behördliche Lizenz benötigt. Auf einem bestimmten Kommunikationskanals ist es jedem Gerät erlaubt, als Sender zu wirken. Man spricht in diesem Zusammenhang auch von lizenzierten und von unlizenzierten Frequenzbereichen. In einem lizenzierten Frequenzbereich erfolgt die Zuteilung der Nutzung eines Kommunikationskanals durch einen Sender durch die Behörden. In einem unlizenzierten Frequenzbereich erfolgt die Zuteilung der Nutzung eines Kommunikationskanals durch die beteiligten Geräte bzw. durch die Betreiber dieser Geräte. Eine solche Zuteilung von Kommunikationskanälen kann dabei insbesondere dynamisch erfolgen, mit dem Ziel, eine optimale Nutzung der in einem Frequenzbereich zur Verfügung stehenden Kommunikationskanäle zu erreichen.

Bei der dynamischen Zuteilung von Kommunikationskanälen ergeben sich viele interessante Probleme und Erfindungen. Es sei hier erwähnt, dass es für die Behörden immer schwieriger wird, die Nutzung der lizenzierten Frequenzbereiche optimal zu gestalten. So kann es sein, dass lizenzierte Frequenzbereiche zwar reserviert sind, aber an bestimmten Standorten oder zu bestimmten Zeiten gar nicht genutzt werden. Eine solche schwache Nutzung von Frequenzbereichen kann sich beispielsweise bei Frequenzbereichen ergeben, welche für eine militärische Nutzung lizenziert sind. Oder es kann sein, dass gewisse Frequenzbereiche übermässig genutzt werden. Eine solche übermässige Nutzung kann sich beispielsweise an bestimmten Standorten und zu bestimmten Zeiten für Frequenzbereiche der Mobilfunktelephonie ergeben. Im Frequenzspektrum, welches für die Erstellung von Kommunikationskanälen genutzt werden kann, gibt es also einerseits Bereiche, welche sehr schwach genutzt werden. Anderseits gibt es aber auch Bereiche im Frequenzspektrum, welche stark genutzt oder sogar überlastet sind. Gewisse Frequenzbereiche wurden von den Behörden gemäss technologischen Bedingungen bei der Einführung einer bestimmten Funktechnik aufgeteilt. So belegt ein analoger Fernsehkanal in einem UHF oder VHF (UHF: Ultra High Frequency, VHF: Very High Frequency) Frequenzbereich beispielsweise eine Bandbreite von 8 MHz. Durch die Entwicklung von der analogen zur digitalen Fernsehtechnik würde jedoch inzwischen für die Übertragung eines Fernsehkanals eine Bandbreite von beispielsweise 4 MHz genügen. Es wäre deshalb wünschenswert, die Nutzung des Frequenzspektrums so zu organisieren, dass es zu einer homogeneren, und damit auch effizienteren Auslastung der zur Verfügung stehenden Frequenzbereiche kommt.

In der Publikation "DIMSUMNet: New Directions in Wireless Networking Using Coordinated Dynamic Spectrum Access (Position Paper for IEEE WoWMoM05, June 2005), Buddhikot M.M., Kolodzy P., Miller S., Ryan K., and Evans J." werden Verfahren für den dynamischen Zugriff auf Spektren beschrieben (DSA: Dynamic Spectrum Access, DIMSUMNet: Dynamic Intelligent Management of Spectrum for Ubiquitous Mobile-access network). Die beschriebene Architektur umfasst (1) einen Spectrum Information and Management broker, (2) ein radio access network, (3) einen radio access network manager und (4) neuartige, intelligente Endgeräte. Dabei sammelt der radio access network manager Daten wie Auslastung, konfigurierte Frequenzbereiche oder Nachfragen von Endgeräten für Frequenzbereiche eines radio access networks und generiert dynamische Meldungen an den Spectrum Information and Management broker um neue Frequenzbereiche zu erhalten oder um Frequenzbereiche welche nicht mehr benötigt werden wieder zurückzugeben. Solche Zuteilungen von Frequenzbereichen können verrechnet werden und können insbesondere gemäss einem Auktionsverfahren gestaltet werden. In einem solchen Netzwerk werden Endgeräte über Basisstationen in ein drahtloses Netzwerk aufgenommen. Dabei kann von Basisstationen signalisiert werden, dass beispielsweise gewisse Frequenzen belegt sind und dass Endgeräte diese Frequenzen nicht weiter benutzen sollen. Es ist ein Nachteil, dass ein erstes Endgerät, welches ausserhalb der Reichweite einer Basisstation liegt, Frequenzen weiter benutzt und damit ein zweites Endgerät, welches innerhalb Reichweite der Basisstation und innerhalb der Reichweite des ersten Endgeräts liegt, bei der Kommunikation mit der Basisstation stören kann.

Um den Zugriff auf ein Netzwerk zu regeln, wird oft ein RTS/CTS (RTS: Ready to Send, CTS: Clear to Send) Protokoll eingesetzt. Der Sender übermittelt dabei ein RTS Paket. Damit wird signalisiert, dass der Zugriff auf das Netzwerk exklusiv sein soll. Der Empfänger signalisiert mit einem CTS Paket die Bereitschaft, Daten zu empfangen. Daten werden übermittelt und der Empfänger signalisiert mit einem ACK (ACKnowledge) einen erfolgreichen Empfang der Daten. Beispielsweise in einem so genannten ad hoc Netzwerk ohne Basisstation kann es zu so genannten hidden Terminal und/oder zu exposed Terminal Problemen kommen. Beim hidden Terminal Problem befindet sich das hidden Terminal ausserhalb der Reichweite des Senders, aber innerhalb der Reichweite des Empfängers. So kann das hidden Terminal den Empfang von Daten beim Empfänger stören. Beim exposed Terminal Problem befindet sich das exposed Terminal in der Reichweite des Senders, aber ausserhalb der Reichweite des Empfängers. Beispielsweise ein ACK des Empfängers kann damit vom exposed Terminal nicht detektiert werden. Das exposed Terminal kann damit zu lange davon abgehalten werden, das Netzwerk zu benutzen, womit das Netzwerk nur suboptimal genutzt wird.

In der Publikation "Dual Busy Tone Multiple Access (DBTMA) - A Multiple Access Control Scheme for Ad Hoc Networks, Haas Z., and Deng J., IEEE Transactions on communications, Vol. 50, No. 6, June 2002" wird ein Verfahren zur Lösung des hidden Terminal und exposed Terminal Problems vorgeschlagen. Zusätzlich zu den RTS und CTS Paketen wird durch das Terminal mittels schmalbandiger receive busy und transmit busy Signale der aktuelle Zustand des Terminals signalisiert. Sobald ein erstes Terminal ein RTS sendet, sendet das erste Terminal ein transmit busy Signal. Sobald ein zweites Terminal ein RTS detektiert, sendet das zweite Terminal das receive busy Signal. Ein Terminal welches das transmit busy oder das receive busy Signal detektiert, verzichtet auf das Senden von irgendwelchen Paketen. Ein Nachteil dieses Verfahrens ist eine erhöhte Komplexität der beteiligten Terminals.

### Offenbarung der Erfindung

Es ist eine Aufgabe der vorliegenden Erfindung, ein neues Verfahren und ein neues System zur dynamischen Konfiguration einer Sende-/Empfangsvorrichtung eines Endgeräts vorzuschlagen, welche nicht die Nachteile des Standes der Technik aufweisen. Insbesondere soll durch das erfindungsgemässe Verfahren und das erfindungsgemässe System die Störung eines drahtlosen Kommunikationskanals durch Endgeräte, welche nicht im Wirkungsbereich einer Sendestation sind, verhindert werden.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mittels mindestens einer Sendestation ein grant beacon und/oder ein denial beacon ausgesendet wird, dass eine Detektionseinheit des Endgeräts zur Detektion des grant beacons und zur Detektion des denial beacons konfiguriert wird, und dass die Sende-/Empfangsvorrichtung des Endgeräts für den Zugriff auf den drahtlosen Kommunikationskanal konfiguriert wird, falls durch die Detektionseinheit des Endgeräts der grant beacon detektierbar ist und der denial beacon nicht detektierbar ist. Ein solches Verfahren hat den Vorteil, dass durch Endgeräte keine Interferenzen auf einem Kommunikationskanal erzeugt werden, welche durch ein hidden Terminal ausgelöst werden.

In einer Ausführungsvariante wird als grant beacon und/oder als denial beacon je eine elektromagnetische Welle mit einer im Wesentlichen einzelnen Frequenz verwendet. Eine solche Ausführungsvariante hat den Vorteil, dass die Erstellung des grant beacons und des denial beacons auf robusten und einfachen Mitteln basiert.

In einer anderen Ausführungsvariante werden als grant beacon und/oder als denial beacon mehrere elektromagnetische Wellen in parallel auf verschiedenen Frequenzen verwendet. Eine solche Ausführungsvariante hat unter anderem den Vorteil, dass die Probleme des frequency fading viel weniger zum Ausdruck kommen, womit die Qualität und Effizienz der Kommunikation erhöht werden können.

In einer weiteren Ausführungsvariante wird als grant beacon und/oder als denial beacon eine elektromagnetische Welle mit einem aufmodulierten Informationssignal verwendet. Eine solche Ausführungsvariante hat den Vorteil, dass mittels des Aufmodulierens von Datenframes auf eine elektromagnetische Welle eine flexible Gestaltung des grant beacons und des denial beacons ermöglicht wird.

In einer anderen Ausführungsvariante werden bei der Detektion des grant beacons Konfigurationsparameter betreffend den Kommunikationskanal an das Endgerät übermittelt und die Sende-/Empfangsvorrichtung des Endgeräts wird entsprechend der Konfigurationsparameter konfiguriert. Eine solche Ausführungsvariante hat den Vorteil, dass beispielsweise durch eine Sendestation die Zuteilung von Kommunikationskanälen inklusive der Art des Zugriffs auf diese Kommunikationskanäle erfolgen kann.

In einer weiteren Ausführungsvariante basieren Konfigurationsparameter für die Konfiguration der Sende-/Empfangsvorrichtung des Endgeräts auf einer Übermittlung von Parametern der Sendestation und/oder Parametern der Sende-/Empfangsvorrichtung des Endgeräts zwischen der Sendestation und dem Endgerät. Eine solche Ausführungsvariante hat den Vorteil, dass die Sendestation und die Sende-/Empfangsvorrichtung des Endgeräts optimal aufeinander abgestimmt werden können, und mittels denial beacon eventuell problematische Konfigurationsparameter wie zum Beispiel eine zu hohe Sendeleistung verhindert werden können.

In einer anderen Ausführungsvariante wird bei der Detektion des grant beacons durch das Endgerät ein drahtloser Signalisierungskanal zwischen der Sendestation und dem Endgerät erstellt. Eine solche Ausführungsvariante hat den Vorteil, dass Parameter bezüglich des Kommunikationskanals zwischen dem Endgerät und der Sendestation austauschbar sind und so beispielsweise eine erfolgreiche Konfiguration entsprechender drahtloser Schnittstellen zwischen dem Endgerät und der Sendestation verlässlich signalisiert werden können.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches schematisch ein hidden Terminal und ein exposed Terminal zeigt.
Figur 2 zeigt ein Blockdiagramm, welches schematisch zwei Sendestationen, ein Hindernis und verschiedene Terminals zeigt.

### Ausführungsform(en) der Erfindung

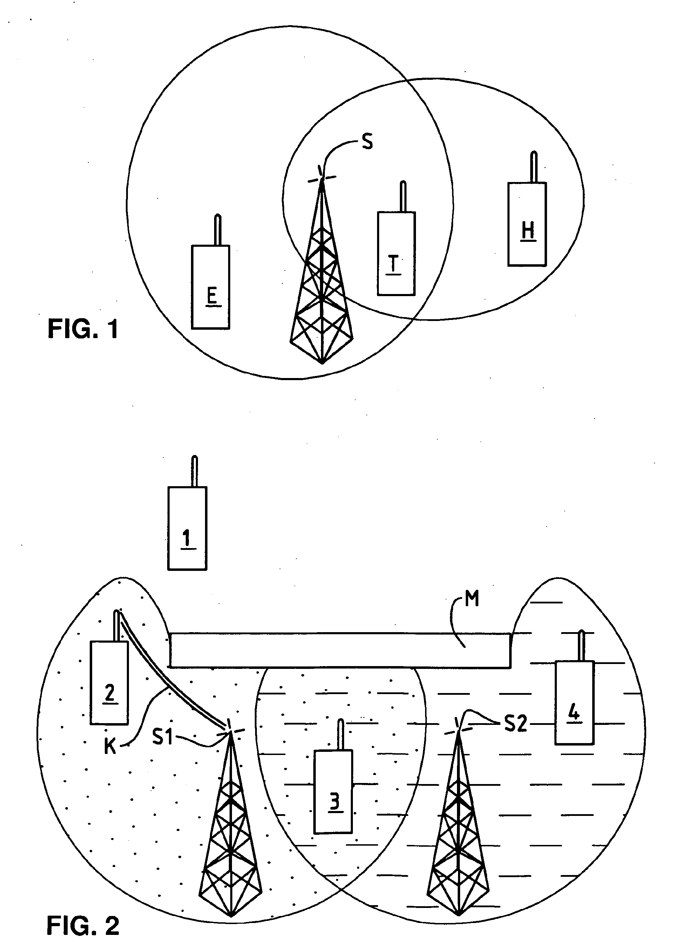

In Figur 1 bezieht sich das Bezugszeichen S auf einen Sender, das Bezugszeichen T bezieht sich auf ein Terminal, das Bezugszeichen H bezieht sich auf ein hidden Terminal und das Bezugszeichen E bezieht sich auf ein exposed Terminal. Der Sender S kann sich auf irgendeinen Sender für das Aussenden von elektromagnetischen Wellen beziehen. Der Sender S kann sich auf einen WLAN Access Point (WLAN: Wireless Local Area Network), eine GSM Base Station (GSM: Global System for Mobile Communication), einen UHF Sender, auf einen FM Sender oder auf irgendeinen anderen Sender beziehen. In Figur 1 bezieht sich das Bezugszeichen T auf ein Terminal für den Empfang von vom Sender S ausgesendeten elektromagnetischen Wellen. Das Terminal T kann beispielsweise ein Notebook mit einer WLAN Schnittstelle, ein Mobilfunktelefon mit einer GSM Schnittstelle, ein Fernsehempfänger für den Empfang von UHF Fernsehsignalen, ein Radioempfänger für den Empfang von FM Radiosignalen oder irgendein anderes Terminal sein. In Figur 1 bezieht sich das Bezugszeichen H auf ein hidden Terminal und das Bezugszeichen E bezieht sich auf ein exposed Terminal. Das hidden Terminal H und das exposed Terminal E können sich auf dem Terminal T entsprechende Terminals beziehen. Das hidden Terminal H und das exposed Terminal E umfassen sowohl eine Empfangsvorrichtung als auch eine Sendevorrichtung. Falls der Sender S mit dem Terminal T mittels des Aussendens und des Empfangens von elektromagnetischen Wellen einer bestimmten Frequenz kommuniziert, dann kann das hidden Terminal H - weil dieses ausserhalb der Reichweite des Senders S angeordnet ist - elektromagnetische Wellen welche vom Sender S ausgesendet werden nicht empfangen. Es besteht deshalb keine Möglichkeit, dass der Sender S gegenüber dem hidden Terminal H signalisiert, auf das Aussenden von elektromagnetischen Wellen derselben Frequenz oder derselben Modulationsart zu verzichten. Das hidden Terminal H kann aber aus irgendeinem Grund - beispielsweise zur Detektion von möglichen Kommunikationspartnern - elektromagnetische Wellen derselben Frequenz und derselben Modulationsart wie der Sender S aussenden, was dazu führen kann, dass beim Terminal T Interferenzen entstehen und die Kommunikation vom Sender S zum Terminal T durch das hidden Terminal H gestört wird. Die Kommunikation zwischen dem Sender S und dem Terminal T kann gemäss einem Protokoll erfolgen, bei dem zuerst durch den Sender S ein Kommunikationskanal reserviert wird, dann Daten vom Sender S und an das Terminal T übertragen werden und das Terminal T dem Sender S durch einen acknowledge (ACK) den erfolgreichen Empfang der Daten signalisiert. Gemäss diesem Protokoll dürfen während der Übertragung von Daten vom Sender S zum Terminal T keine weiteren Terminals den reservierten Kommunikationskanal benutzen. Das kann dazu führen, dass das exposed Terminal E davon abgehalten wird, diesen Kommunikationskanal zu benutzen, obwohl dieser für einen Zugriff schon wieder freigegeben wurde. Damit wird aber verfügbare Bandbreite nicht genutzt.

In Figur 2 bezieht sich das Bezugszeichen S1 auf einen ersten Sender und das Bezugszeichen S2 auf einen zweiten Sender. Die Sender S1 und S2 umfassen Sendevorrichtungen und Empfangsvorrichtungen für die Erstellung einer drahtlosen Kommunikationsschnittstelle und zur Erstellung eines Kommunikationskanals mit einem Kommunikationsgerät gemäss irgendeinem Standard. Ein solcher Standard kann einen IEEE 802.11 Standard, einen IEEE 802.22 Standard oder irgendeinen anderen Standard umfassen. Die Sender S1 und S2 umfassen zudem Vorrichtungen für das Aussenden der erfindungsgemässen beacons. Die Vorrichtungen für das Aussenden eines beacons können einen Oszillator zur Erzeugung einer elektromagnetischen Welle einer bestimmbaren Frequenz, beispielsweise einer elektromagnetischen Welle im Frequenzbereich von 5 GHz bis 6 GHz umfassen. Die Vorrichtungen der Sender für das erfindungsgemässe Aussenden von elektromagnetischen Wellen können beispielsweise auf eine erste Frequenz, beispielsweise 5.125 GHz, und auf eine zweite Frequenz, beispielsweise 5.135 GHz, eingestellt werden. Das Aussenden einer elektromagnetischen Welle der ersten Frequenz kann dabei dem Aussenden eines grant beacons entsprechen und das Aussenden einer elektromagnetischen Welle der zweiten Frequenz kann dem Aussenden eines denial beacons entsprechen.

In Figur 2 beziehen sich die Bezugszeichen 1, 2, 3 und 4 auf erfindungsgemässe Endgeräte an verschiedenen Standorten. Ein erfindungsgemässes Endgerät umfasst Mittel zur Detektion eines grant beacons und eines denial beacons. Zudem kann ein erfindungsgemässes Endgerät Mittel zur Erstellung einer drahtlosen Kommunikationsschnittstelle und zur Erstellung einer Kommunikationskanals mit einem Sender S1, S2 umfassen. Die Erstellung einer Kommunikationsverbindung erfolgt gemäss irgendeinem Standard. Ein solcher Standard kann einen IEEE 802.11 Standard, einen IEEE 802.22 Standard oder irgendeinen anderen Standard umfassen. In der Literatur werden erfindungsgemässe Endgeräte 1, 2, 3 oder 4 auch als so genannte Software Defined Radio oder Cognitive Radio bezeichnet. Der Kommunikationskanal kann sich auf einen oder mehrere Kommunikationskanäle K mit bestimmbaren Eigenschaften, wie beispielsweise der Kanalfrequenz und der Modulationsart, in einem beliebigen Frequenzbereich beziehen. Verschiedene Endgeräte 1, 2, 3 oder 4 kommunizieren miteinander oder mit anderen hier nicht dargestellten Endgeräten auf diesem Kommunikationskanal K. Der Sender S1 sendet einen grant beacon aus und der Sender S2 sendet einen denial beacon aus. Der Wirkungsbereich des grant beacons und des denial beacons wird durch das Hindernis M eingeschränkt. Der Wirkungsbereich des grant beacons und des denial becons umfasst denselben Raum wie der Wirkungsbereich der drahtlosen Kommunikationsschnittstelle der Sender S1 und S2 zur Erstellung eines Kommunikationskanals K. In Figur 2 bezieht sich das Bezugszeichen 1 auf ein Endgerät, welches sich weder im Wirkungsbereich eines grant beacons noch im Wirkungsbereich eines denial beacons befindet. Weil das Endgerät 1 keinen grant beacon detektieren kann, verzichtet das Endgerät 1 auf die Konfiguration des Kommunikationskanals K. In Figur 2 bezieht sich das Bezugszeichen 2 auf ein Endgerät, welches sich im Wirkungsbereich eines grant beacons und nicht im Wirkungsbereich eines denial beacons befindet. Weil das Endgerät 2 einen grant beacon und keinen denial beacon detektieren kann, wird eine Sende-/Empfangsvorrichtung des Endgeräts 2 für den Zugriff auf den Kommunikationskanal K konfiguriert. In Figur 2 bezieht sich das Bezugszeichen 3 auf ein Endgerät, welches sich im Wirkungsbereich eines grant beacons und im Wirkungsbereich eines denial beacons befindet. Weil das Endgerät 3 sowohl den grant beacon als auch den denial beacon detektieren kann, verzichtet das Endgerät 3 auf die Konfiguration des Kommunikationskanals K. In Figur 2 bezieht sich das Bezugszeichen 4 auf ein Endgerät, welches sich im Wirkungsbereich eines denial beacons befindet. Weil das Endgerät 4 keinen grant beacon und einen denial beacon detektieren kann, verzichtet das Endgerät 4 auf die Konfiguration des Kommunikationskanals K.

Falls der grant beacon und der denial beacon aus einer elektromagnetischen Welle einer im Wesentlichen einzelnen Frequenz besteht, dann kann es bei einer Überlagerung zweier gleichartiger beacons, welche von zwei unterschiedlichen Sendern ausgestrahlt werden, zu einer Verstärkung des beacons und somit zu einer leichteren Detektierbarkeit des beacons kommen.

Der grant beacon und der denial beacon können aber auch als elektromagnetische Welle einer bestimmten Frequenz mit aufmoduliertem Informationssignal aufgebaut sein. Mittels des aufmodulierten Informationssignals können beispielsweise Datenframes übertragen werden, wobei ein erstes Datenframe dem grant beacon und ein zweites Datenframe einem denial beacon entspricht. Bei einer Überlagerung solcher beacons welche von unterschiedlichen Sendern ausgestrahlt werden, kann es zu einer Kollision der beacons und deshalb zu einer mangelhaften Detektierbarkeit der beacons kommen. Eine Lösung dieses Problems kann die zufällige Wahl eines Zeitpunkts für die Aussendung eines Datenframes sein. Eine weitere Lösung kann aber auch die koordinierte Wahl dieses Zeitpunkts sein.

Bei der Detektion eines grant beacons kann das Endgerät so eingerichtet sein, dass Kommunikationsparamter zur Konfiguration der Sende-/Empfangsvorrichtung des Endgeräts beispielsweise über ein auf dem grant beacon basierten Kommunikationskanal zwischen dem Sender S1 und dem Endgerät 2 übermittelt werden. Kommunikationsparameter können Parameter wie die erlaubte Übertragungsleistung, die Modulationsart, die verwendeten Preambeln, die Rahmenlängen, die Duty Cycles oder irgendwelche andere Parameter betreffen.

Mittels des grant beacons und des denial becons können Frequenzbereiche und/oder Kommunikationskanäle zentral verwaltet und für die Verwendung durch Endgeräte freigeschaltet oder gesperrt werden. Eine solche dynamische Verwaltung hat den Vorteil, dass eine Frequenzzuteilung den aktuellen Bedürfnissen eines Sende-/Empfangsgebietes einfach angepasst werden können.

## Patentansprüche

1. Verfahren zur dynamischen Konfiguration einer Sende-/Empfangsvorrichtung mindestens eines Endgerätes (1,2,3,4) für den Zugriff auf mindestens einen drahtlosen Kommunikationskanal (K), **dadurch gekennzeichnet,**
**dass** mittels mindestens einer Sendestation (S1,S2) ein grant beacon und/oder ein denial beacon ausgesendet wird,
**dass** eine Detektionseinheit des Endgeräts (1,2,3,4) zur Detektion des grant beacons und zur Detektion des denial beacons konfiguriert wird, und
**dass** die Sende-/Empfangsvorrichtung des Endgeräts (1,2,3,4) für den Zugriff auf den drahtlosen Kommunikationskanal (K) konfiguriert wird, falls durch die Detektionseinheit des Endgeräts der grant beacon detektierbar ist und der denial beacon nicht detektierbar ist.

2. Verfahren nach Anspruch 1, **dadurch gekennzeichnet, dass** als grant beacon und/oder als denial beacon eine elektromagnetische Welle mit einer im Wesentlichen einzelnen Frequenz verwendet wird.

3. Verfahren nach Anspruch 1, **dadurch gekennzeichnet, dass** als grant beacon und/oder als denial beacon mehrere elektromagnetische Wellen in parallel auf verschiedenen Frequenzen verwendet werden.

4. Verfahren nach Anspruch 1, **dadurch gekennzeichnet, dass** als grant beacon und/oder als denial beacon eine elektromagnetische Welle mit einem aufmodulierten Informationssignal verwendet wird.

5. Verfahren nach einem der Ansprüche 1 bis 4, **dadurch gekennzeichnet, dass** bei der Detektion des grant beacons Konfigurationsparameter betreffend den Kommunikationskanal an das Endgerät (1,2,3,4) übermittelt werden und dass die Sende-/Empfangsvorrichtung des Endgeräts (1,2,3,4) entsprechend der Konfigurationsparameter konfiguriert wird.

6. Verfahren nach einem der Ansprüche 1 bis 5, **dadurch gekennzeichnet, dass** Konfigurationsparameter für die Konfiguration der Sende-/Empfangsvorrichtung des Endgeräts (1,2,3,4) auf einer Übermittlung von Parametern der Sendestation (S1,S2) und/oder Parametern der Sende-/Empfangsvorrichtung des Endgeräts (1,2,3,4) zwischen der Sendestation (S1,S2) und dem Endgerät (1,2,3,4) basieren.

7. Verfahren nach einem der Ansprüche 1 bis 6, **dadurch gekennzeichnet, dass** bei der Detektion des grant beacons durch das Endgerät (1,2,3,4) ein drahtloser Signalisierungskanal zwischen der Sendestation und dem Endgerät erstellt wird.

8. System zur dynamischen Konfiguration einer Sende-/Empfangsvorrichtung eines Endgeräts (1,2,3,4) für den Zugriff auf einen drahtlosen Kommunikationskanal (K), **dadurch gekennzeichnet,**
**dass** mindestens eine Sendestation (S1,S2) Mittel zum Aussenden eines grant beacons und zum Aussenden eines denial beacons umfasst,
**dass** das Endgerät (1,2,3,4) eine Detektionseinheit zur Detektion des grant beacons und zur Detektion des denial beacons umfasst,
**dass** das Endgerät (1,2,3,4) Mittel zur Konfiguration der Sende-/Empfangsvorrichtung des Endgeräts (1,2,3,4) für den Zugriff auf den drahtlosen Kommunikationskanal umfasst, wobei der Zugriff auf den drahtlosen Kommunikationskanal konfigurierbar ist, falls durch die Detektionseinheit des Endgeräts (1,2,3,4) der grant beacon detektierbar ist und der denial beacon nicht detektierbar ist.

9. System nach Anspruch 8, **dadurch gekennzeichnet, dass** der grant beacon und/oder der denial beacon aus einer elektromagnetischen Welle mit einer im Wesentlichen einzelnen Frequenz besteht.

10. System nach Anspruch 8, **dadurch gekennzeichnet, dass** der grant beacon und/oder der denial beacon aus mehreren elektromagnetischen Wellen in parallel auf verschiedenen Frequenzen besteht.

11. System nach Anspruch 8, **dadurch gekennzeichnet, dass** der grant beacon und/oder der denial beacon aus einer elektromagnetischen Welle mit einem aufmodulierten Informationssignal besteht.

12. System nach einem der Ansprüche 8 bis 11, **dadurch gekennzeichnet, dass** die Sendestation Mittel zur Übermittlung von Konfigurationsparametern betreffend den Kommunikationskanal an das Endgerät (1,2,3,4) umfasst und dass das Endgerät (1,2,3,4) Mittel zur Konfiguration der Sende-/Empfangsvorrichtung entsprechend der übermittelten Konfigurationsparameter umfasst.

13. System nach einem der Ansprüche 8 bis 12, **dadurch gekennzeichnet, dass** die Sendestation (S1,S2) und das Endgerät (1,2,3,4) Mittel zur Übermittlung von Parametern zwischen der Sendestation (S1,S2) und dem Endgerät (1,2,3,4) umfasst.

14. System nach einem der Ansprüche 8 bis 13, **dadurch gekennzeichnet, dass** das Endgerät (1,2,3,4) und die Sendestation (S1,S2) Mittel zur Erstellung eines drahtlosen Signalisierungskanals zwischen der Sendestation (S1,S2) und dem Endgerät (1,2,3,4) umfasst.

## Claims

1. Method for dynamic configuration of a transceiver of at least one terminal (1,2,3,4) for access to at least one wireless communication channel (K), **characterised in that**
by means of at least one transmitting station (S1,S2) a grant beacon and/or a denial beacon is emitted,
a detection unit of the terminal (1,2,3,4) is configured for detection of the grant beacon and for detection of the denial beacon, and
the transceiver of the terminal (1,2,3,4) is configured for access to the wireless communication channel (K) if the grant beacon is detectable by the detection unit of the terminal and the denial beacon is not detectable.

2. Method according to claim 1, **characterised in that** used as the grant beacon and/or as the denial beacon is an electromagnetic wave having substantially a single frequency.

3. Method according to claim 1, **characterised in that** used as the grant beacon and/or as the denial beacon is a plurality of electromagnetic waves in parallel on different frequencies.

4. Method according to claim 1, **characterised in that** used as the grant beacon and/or as the denial beacon is an electromagnetic wave with a modulated information signal.

5. Method according to one of the claims 1 to 4, **characterised in that** with the detection of the grant beacon configuration parameters relating to the communication channel are transmitted to the terminal (1,2,3,4) and that the transceiver of the terminal (1,2,3,4) is configured in accordance with the configuration parameters.

6. Method according to one of the claims 1 to 5, **characterised in that** configuration parameters for the configuration of the transceiver of the terminal (1,2,3,4) are based on a transmission, between the transmitting station (S1,S2) and the terminal (1,2,3,4), of parameters of the transmitting station (S1,S2) and/or parameters of the transceiver of the terminal (1,2,3,4).

7. Method according to one of the claims 1 to 6, **characterised in that** with the detection of the grant beacon by the terminal (1,2,3,4) a wireless signaling channel is set up between the transmitting station and the terminal.

8. System for dynamic configuration of a transceiver of a terminal (1,2,3,4) for access to a wireless communication channel (K), **characterized in that**
at least one transmitting station (S1,S2) comprises means of transmitting a grant beacon and of transmitting a denial beacon,
the terminal (1,2,3,4) comprises a detection unit for detection of the grant beacon and for detection of the denial beacon,
the terminal (1,2,3,4) comprises means for configuration of the transceiver of the terminal (1,2,3,4) for access to the wireless communication channel, the access to the wireless communication channel being configurable if the grant beacon is detectable by the detection unit of the terminal (1,2,3,4) and the denial beacon is not detectable.

9. System according to claim 8, **characterised in that** the grant beacon and/or the denial beacon consists of an electromagnetic wave having substantially a single frequency.

10. System according to claim 8, **characterised in that** the grant beacon and/or the denial beacon is composed of a plurality of electromagnetic waves in parallel on different frequencies.

11. System according to claim 8, **characterised in that** the grant beacon and/or the denial beacon consists of an electromagnetic wave with a modulated information signal.

12. System according to one of the claims 8 to 11, **characterised in that** the transmitting station comprises means of transmitting configuration parameters relating to the communication channel to the terminal (1,2,3,4), and that the terminal (1,2,3,4) comprises means for configuration of the transceiver in accordance with the transmitted configuration parameters.

13. System according to one of the claims 8 to 12, **characterised in that** the transmitting station (S1,S2) and the terminal (1,2,3,4) comprise means of transmitting parameters between the transmitting station (S1,S2) and the terminal (1,2,3,4).

14. System according to one of the claims 8 to 13, **characterised in that** the terminal (1,2,3,4) and the transmitting station (S1,S2) comprises <sic. comprise> means for setting up a wireless signaling channel between the transmitting station (S1,S2) and the terminal (1,2,3,4).

## Revendications

1. Procédé pour la configuration dynamique d'un dispositif émetteur/récepteur d'au moins un terminal (1, 2, 3, 4) pour l'accès d'au moins un canal de communication sans fil (K), **caractérisé**
**en ce qu'**au moins une station émettrice (S1, S2) émet une radiobalise d'accord et/ou une radiobalise de refus,
**en ce qu'**une unité de détection du terminal (1, 2, 3, 4) est configurée pour la détection de la radiobalise d'accord et pour la détection de la radiobalise de refus et
**en ce que** le dispositif émetteur/récepteur du terminal (1, 2, 3, 4) est configuré pour l'accès au canal de communication sans fil (K) si l'unité de détection du terminal peut détecter la radiobalise d'accord et ne peut pas détecter la radiobalise de refus.

2. procédé selon la revendication 1, **caractérisé en ce qu'**en tant que radiobalises d'accord et/ou radiobalise de refus, on utilise une onde électromagnétique avec une fréquence sensiblement unique

3. procédé selon la revendication 1, **caractérisé en ce qu'**en tant que radiobalise d'accord et/ou radiobalise de refus, on utilise plusieurs ondes électromagnétiques en parallèle sur des fréquences différentes.

4. Procédé selon la revendication 1, **caractérisé en ce qu'**en tant que radiobalises d'accord et/ou radiobalise de refus, on utilise une onde électromagnétique avec un signal d'information modulé.

5. Procédé selon l'une des revendications 1 à 4, **caractérisé en ce que** lors de la détection de la radiobalise d'accord, des paramètres de configuration concernant le canal de communication sont transmis au terminal (1, 2, 3, 4) et **en ce que** le dispositif émetteur/récepteur du terminal (1, 2, 3, 4) est configuré en fonction des paramètres de configuration.

6. Procédé selon l'une des revendications 1 à 5, **caractérisé en ce que** des paramètres de configuration pour la configuration du dispositif émetteur/récepteur du terminal (1, 2, 3, 4) se basent sur une transmission de paramètres de la station émettrice (S1, S2) et/ou de paramètres du dispositif émetteur/récepteur du terminal (1, 2, 3, 4) entre la station émettrice (S1,S2) et le terminal (1, 2, 3, 4).

7. Procédé selon l'une des revendications 1 à 4, **caractérisé en ce que** lors de la détection de la radiobalise par le terminal (1, 2, 3, 4), un canal de signalisation sans fil est établi entre la station émettrice et le terminal.

8. Système pour la configuration dynamique d'un dispositif émetteur/récepteur d'un terminal (1, 2, 3, 4) pour l'accès à un canal de communication sans fil (K), **caractérisé**
**en ce qu'**au moins une station émettrice (S1, S2) comprend des moyens pour l'envoi d'une radiobalise d'accord et pour l'envoi d'une radiobalise de refus,
**en ce que** le terminal (1, 2, 3, 4) comprend des moyens pour la configuration du dispositif émetteur/récepteur du terminal (1, 2, 3, 4) pour l'accès au canal de communication sans fil, l'accès au canal de communication sans fil étant configurable si l'unité de détection du terminal (1, 2, 3, 4) peut détecter la radiobalise d'accord et ne peut pas détecter la radiobalise de refus.

9. Système selon la revendication 8, **caractérisé en ce que** la radiobalise d'accord et/ou la radiobalise de refus se compose d'une onde électromagnétique avec une fréquence sensiblement unique.

10. Système selon la revendication 8, **caractérisé en ce que** la radiobalise d'accord et/ou la radiobalise de refus se compose de plusieurs ondes électromagnétiques en parallèle sur différentes fréquences.

11. Système selon la revendication 8, **caractérisé en ce que** la radiobalise d'accord et/ou la radiobalise de refus se compose d'une onde électromagnétique avec un signal d'information modulé.

12. Système selon l'une des revendications 8 à 11, **caractérisé en ce que** la station émettrice comprend des moyens pour la transmission de paramètres de configuration concernant le canal de communication au terminal (1, 2, 3, 4) et **en ce que** le terminal (1, 2, 3, 4) comprend des moyens pour la configuration du dispositif émetteur/récepteur en fonction des paramètres de configuration transmis.

13. Système selon l'une des revendications 8 à 12, **caractérisé en ce que** la station émettrice (S1, S2) et le terminal (1, 2, 3, 4) comprend des moyens pour la transmission de paramètres entre la station émettrice (S1, S2) et le terminal (1, 2, 3, 4).

14. Système selon l'une des revendications 8 à 13, **caractérisé en ce que** le terminal (1, 2, 3, 4) et la station émettrice (S1, S2) comportent des moyens pour la réalisation d'un canal de signalisation sans fil entre la station émettrice (S1, S2) et le terminal (1, 2, 3, 4).
